# EUROPÄISCHE PATENTSCHRIFT

(11) **EP 1 286 820 B1**
(45) Veröffentlichungstag und Bekanntmachung des Hinweises auf die Patenterteilung: **15.09.2004**
(21) Anmeldenummer: 01929162.4
(22) Anmeldetag: 23.05.2001
(51) Int. Cl.: B29C 65/08, B29C 65/00, B29C 63/00

(54) **VERSIEGELUNG**
SEALING
SCELLEMENT

(30) Priorität: 26.05.2000 CH 106800
(43) Veröffentlichungstag der Anmeldung: 05.03.2003
(73) Patentinhaber: Woodwelding AG, 8002 Zürich (CH)
(72) Erfinder: TORRIANI, Laurent, CH-2502 Biel (CH); AESCHLIMANN, Marcel, CH-2514 Ligerz (CH)
(74) Vertreter: Frei, Alexandra Sarah
(86) Internationale Anmeldenummer: PCT/CH2001/000318
(87) Internationale Veröffentlichungsnummer: WO 2001/089809

(56) Entgegenhaltungen:
- WO-A-01/09445
- DD-A- 257 797
- DE-A- 3 045 706
- DE-A- 3 828 340
- DE-A- 4 303 092
- FR-A- 2 455 502
- US-A- 5 840 154
- PATENT ABSTRACTS OF JAPAN vol. 006, no. 023 (M-111), 10. Februar 1982 (1982-02-10) & JP 56 139918 A (INOUE JAPAX RES INC), 31. Oktober 1981 (1981-10-31)

## Beschreibung

Die Erfindung betrifft ein Verfahren zum Versiegeln von Oberflächen gemäss den Patentansprüchen.

Aus dem Stand der Technik sind verschiedene Verfahren zum Versiegeln von Oberflächen bekannt. Diese beruhen auf dem Aufbringen von einer Schutzschicht durch lackieren oder durch aufkleben. Nachteilhaft an diesen Verfahren ist, dass besonders an Kanten und Ecken von Spanplatten, Parkettböden und Holzfaserplatten keine genügende Abdichtung erreicht wird. Bspw. bei entsprechend behandelten Parkettbelägen besteht somit das Problem, dass an den Stosskanten, insb. Seitenoder Schmalflächen Feuchtigkeit eindringen kann, die zum Quellen des Materials führt. Zudem sind die bekannten Verfahren aufwendig, teuer, unflexibel und erfordern komplexe Anlagen.

Es ist Aufgabe der hier offenbarten Erfindung ein Verfahren zu zeigen, das diese Probleme vermeidet.

Die Publikation DD-A-257 797 beschreibt ein Verfahren zum Versiegeln von Oberflächen, wobei ein dünnes Material auf der Oberfläche positioniert und dieses Material mittels HF-Technik partiell und örtlich begrenzt aufgeschmolzen und anschliessend an die Oberfläche angepresst und so mit der Oberfläche verbunden wird.

Es ist Aufgabe der hier offenbarten Erfindung, ein Verfahren zu zeigen, das die Probleme des erstgenannten Standes der Technik vermeidet.

Diese Aufgabe wird erfindungsgemäß durch eine Verwendung mit den Merkmalen von Anspruch 1 gelöst.

Das hier offenbarte Verfahren zum Versiegeln einer Oberfläche eines Körper beruht darauf, dass auf die Oberfläche eines Körpers ein dünnes Material aufgebracht wird und mit dieser durch temporäres Aufschmelzen infolge Wärme, die durch mechanische Anregung (mittels einem Piezoelement) entsteht, verbunden wird. Beim dünnen Material handelt es sich bspw. um eine Folie oder um ein Band. Dieses dünne Material wird durch partielles, temporäres Aufschmelzen mit dem zu versiegelnden Teil, resp. dessen Oberfläche stoffschlüssig verbunden, derart dass eine dauerhafte Versiegelung die gegenüber Feuchtigkeit und anderen Umwelteinflüssen genügend Dichtigkeit garantiert, erreicht wird. Das temporäre Aufschmelzen erfolgt vorzugsweise ohne thermische Wärmequelle, sondern durch Reibungswärme infolge mechanischer Anregung vorzugsweise durch Schwingungen. Die Frequenz der Schwingung liegt typischerweise am oberen Ende des hörbaren oder im Bereich von Ultraschall. Die durch Anregung entstehende Reibungswärme führt zum gezielten Aufschmelzen des Materials. Durch Aufbringen von Druck wird erreicht, dass Poren und Hohlräume ausgefüllt werden. Aufgrund der grossen Scherwirkung weist das aufgeschmolzene Material eine sehr niedrige Viskosität auf, so dass selbst kapillare Hohlräume ausgefüllt werden. Die Eindringtiefe eines bestimmten Materials lässt sich u.a. mittels der Frequenz und der Amplitude, sowie der Verweildauer gezielt einstellen. Das Verfahren ist für praktisch alle Oberflächen eines Körpers anwendbar. Mit einer entsprechenden Anordnung ist es möglich sehr grosse Flächen kontinuierlich oder abschnittsweise zu verschliessen. Das Verfahren kann stationär oder aber auch flexibel eingesetzt werden. Mittels entsprechenden Maschinen ist es möglich, grosse Flächen zu versiegeln (bspw. Böden von Turnhallen, jegliche Art von Belägen, usw.). Das zur Versiegelung verwendete Material kann bei Bedarf mit dekorativen Elementen wie Mustern oder Bildern versehen werden. Beispielsweise ist es so möglich eine Trägerplatte mit einer Folie mit Farbdruck so zu versiegeln, dass der Eindruck eines echten Parkettbodens entsteht. Eine Dekorschicht kann auch separat verarbeitet werden. Es ist nicht zwingend, dass alle Flächen verschlossen werden. In gewissen Fällen genügt es, wenn nur kritische Bereiche mit dem hier beschriebenen Verfahren behandelt werden.

Das Verfahren wird zum Versiegeln von Oberflächen von porösen, faserigen Materialien wie Holz, Spanplatten, Kork, Karton, Faserplatten, aber auch Beton, Ton, usw. Das Verfahren ist auch für metallische und andere Materialien anwendbar. Die Erfindung zeichnet sich u.a. dadurch aus, dass sie zur kontinuierlichen Verarbeitung einsetzbar ist. Da auf Lösungsmittel in der Regel nicht erforderlich sind, entfallen langwierige Trockenzeiten und aufwendige Apparaturen. Die Erfindung beruht auf dem kurzzeitigen, örtlich begrenzten Aufschmelzen. eines vorzugsweise thermoplastischen, Werkstoffes. Vorteilhaft ist, dass aufgrund der sehr kurzen Aufschmelz- und Auskühlzeiten keine signifikanten Wartezeiten entstehen. Ausserdem wird das aufgeschmolzene Material durch die kurze Verarbeitungszeit sehr schonend verarbeitet.

Die Beschaffenheit der Oberflächen kann durch das Aufbringen von mehreren Folien eingestellt werden. So ist es beispielsweise möglich eine erste Schicht mit dekorativen Mustern mit einer weiteren zu verbinden, die besonders abriebfest ist. Diese Mehrschicht-Technologie kann in einem oder in mehreren Arbeitsgängen aufgebracht werden. Da es sich in der Regel um thermisch aufschmelzbare Stoffe handelt, ist es möglich mehrere Schichten in zeitlichen Abständen aufzubringen. Auch funktionelle Kanten (Steck- oder Schnappverbindungen) können dauerhaft verschlossen werden.

Erfindungsgemäss behandelte Oberflächen können auch nachträglich durch erneutes mechanisches Anregen z.B. untereinander mit einer Tiefenwirkung verbunden werden. So ist es beispielweise sinnvoll Bodenbeläge, die aus mehreren einzelnen Platten bestehen und entlang von gewissen Seiten aneinander Stossen, mittels einer entsprechenden Einrichtung derart anzuregen, dass die Kanten miteinander dauerhaft verbunden werden. Ergänzend oder alternativ können auch andere Bindemittel wie Klebstoffe zum Einsatz kommen.

Anhand von Figuren wird die Erfindung anschliessend detailliert erläutert. Es versteht sich von selbst, dass die Idee die Erfindung hierbei nicht auf die gezeigte Ausführungsformen beschränkt ist.

Es zeigen:
- Figur 1: eine schematische Übersicht über das erfindungsgemässe Verfahren;
- Figur 2: zeigt einen Ausschnitt aus Figur 1,
- Figur 3: die Anwendung des Verfahrens auf eine Nut.

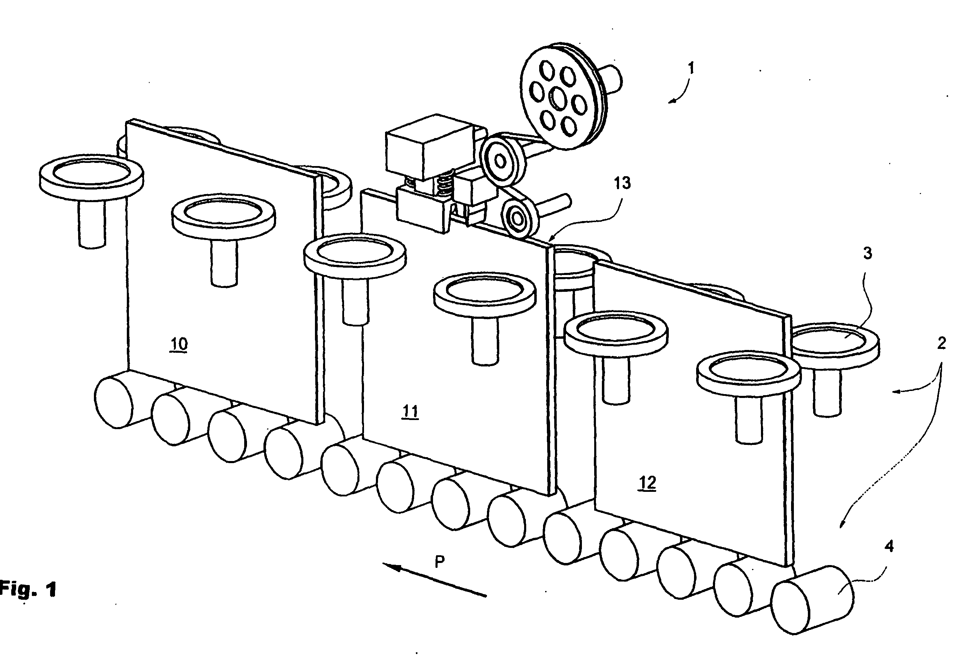

**Figur 1** zeigt schematisch die wesentlichen Verfahrensschritte der Erfindung. Zu erkennen sind Platten 10, 11, 12, von denen eine Stirnseite 13, resp. Schmalseite, versiegelt werden. Die Platten 10, 11, 12 werden mittels Fördermitteln 2 in Richtung eines Pfeils P an einer Verarbeitungsvorrichtung 1 vorbeigeführt. Die Fördermittel 2 bestehen hier aus mehreren um ihre Achsen drehbar gelagerten Förderrollen 3 und Förderwalzen 4, die mit den Platten 10, 11, 12 derart in Wirkverbindung stehen, dass sie diese halten und an der Verarbeitungsvorrichtung 1 vorbeiführen. Die Fördermittel 2 sind an Halterungen, die der Übersichtlichkeit halber nicht näher dargestellt sind, gelagert und durch einen entsprechenden Antrieb (nicht näher dargestellt) angetrieben. Als Antrieb können beispielsweise Kettengetriebe, Elektromotoren, oder hydraulische Antriebe verwendet werden.

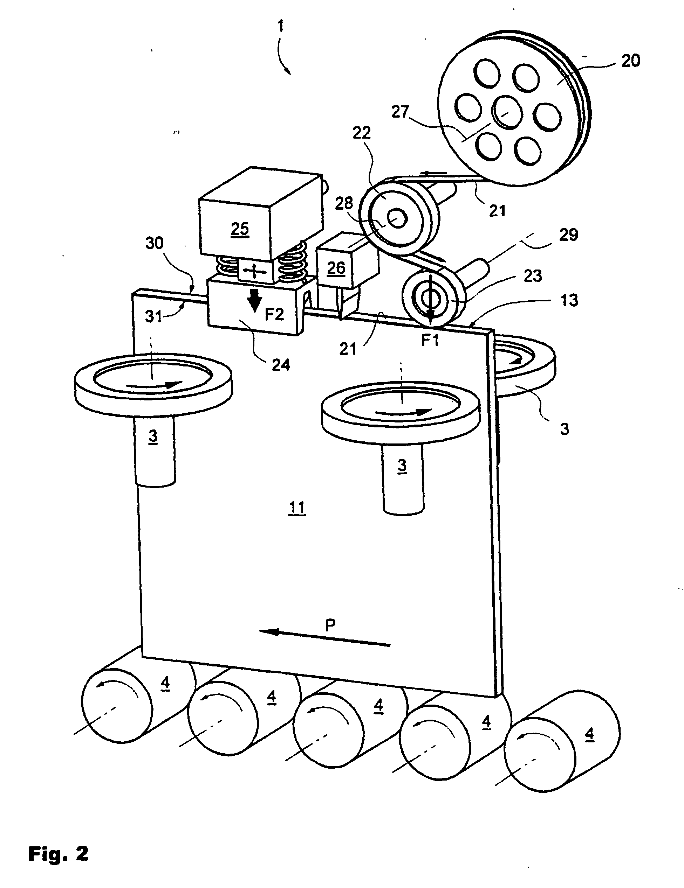

**Figur 2** zeigt eine Detailansicht aus Figur 1. Zu erkennen sind die Verarbeitungsvorrichtung 1, eine Platte 11, die verarbeitet wird, und Förderrollen 3 und Förderwalzen 4. Eine Vorratspule 20, auf der ein Band 21 aufgewickelt ist, dient hier als Speicher. Das Band 21 wird über eine erste und eine zweite Führungsrolle 22, 23 abgespult und auf der zu versiegelnden Fläche 13 positioniert. Die zweite Führungsrolle 23 presst mit einer gewissen Kraft F1 das Band 21 auf die Oberfläche 13 der Platte 11. Die Bewegung der Führungsrollen 22, 23 und der Förderrolle 20 sind so aufeinander abgestimmt, dass das Band 21 sicher auf die zu versiegelnde Oberfläche 13 übertragen wird und falls erforderlich unter einer gewissen Spannung steht. Die Vorratsspule 20 und die Führungsrollen 22, 23 sind drehbar um Achsen 27, 28, 29 drehbar gelagert. Die Verarbeitungsvorrichtung 1 ist hier ortsfest angebracht und die Platte 11 bewegt sich relativ zur ihr, geführt durch die Führungsmittel 3, 4 in Richtung des Pfeils P. Nachdem die Platte 11 unter der zweiten Rolle 23 durchgeführt wurde, passiert sie einen Schallkopf 24 der in Wirkverbindung mit der Platte 11 und dem Band 21 steht. Das Band 21 wird mit der Oberfläche 13 durch temporäres Aufschmelzen verbunden. Das Aufschmelzen erfolgt bevorzugt über mechanisches Anregen derart, dass das Band 21 und/oder die Oberfläche 13 infolge von Reibungswärme partiell aufschmilzt. Durch Druck, schematisch dargestellt durch einen Pfeil F2, wird das aufgeschmolzenen Materialien zusätzlich verbunden. Der Schallkopf 24 ist derart ausgebildet, dass er mit der zu verarbeitenden Oberfläche korrespondiert, so dass diese, insbesondere im Bereich um die Kanten 30, 31, wirkungsvoll versiegelt wird. Der Schallkopf 24 ragt in der hier dargestellten Ausführungsform über die Kanten 30, 31 der Platte 11. Dadurch ist es auch möglich Bänder 21 zu verarbeiten, die breiter sind als die Dicke der Platte 11, so dass die Versiegelung über die Fläche 13 hinausgeht. Einer Überlappung von mehren Schichten ist möglich. Bei Bedarf sind Schwingköpfe mit einer anderen Charakteristik verwendbar. Der Resonator 24 wird über einen Aktuator 25 in Schwingung versetzt. Die anregenden Schwingungen werden bevorzugt mittels einem an den Schallkopf 24 (Sonotrode) angekoppelten Piezo-Element (nicht näher dargestellt) erzeugt. Je nach Anwendungsgebiet können auch andere mechanische Anregungen zum Einsatz kommen. Am Ende der Platte 11 trennt eine Schneidevorrichtung 26 das Band 21. Die Schneidevorrichtung 26 ist mit Vorteil so ausgebildet, dass sie das Band 21 bis zum Verarbeiten der nächsten Platte 12 (vgl. Figur 1) positioniert.

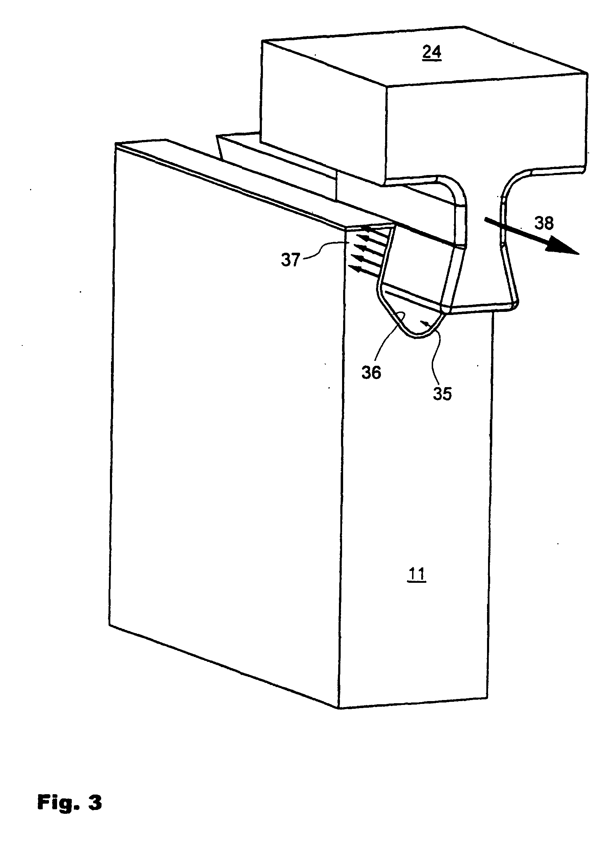

**Figur 3** zeigt stark vereinfacht wie eine profilierte Nut 35 einer Platte 11 versiegelt wird. Die Nut 35 ist ein Teil einer Schnappverbindung oder Steckverbindung zum Verbinden der Platte 11 mit einem weiteren Platten (nicht näher dargestellt) oder anderen Körpern (nicht näher dargestellt). Das Gegenstück wird durch ein korrespondierend ausgebildetes Mittel gebildet (nicht näher dargestellt). Die Verarbeitung desselben erfolgt entsprechend analog dem hier beschriebenen Verfahren und wird deshalb nicht mehr im Detail erläutert.

Ein Band 21 wird mittels einem Schallkopf 24 gegen eine Oberfläche 36 der Nut 35 gepresst. Infolge der durch die Schwingungen des Schallkopfs 24 entstehenden Reibungswärme wird das vorzugsweise thermoplastische Band 21 (ein mit einer entsprechenden Beschichtung versehenes äquivalentes Mittel ist ebenfalls möglich) temporär aufgeschmolzen und in die Oberfläche 36 gepresst. Dieser Vorgang wird schematisch durch Pfeile 37 verdeutlicht. Der Schallkopf 24 wird gezielt gegen die Oberfläche 36 der Nut 35 gepresst, so dass das Eindringen des aufgeschmolzenen Materials unterstützt wird. Das Band 21 wird vorab in die Nut 35 kontinuierlich eingeführt oder eingelegt. Mittels entsprechenden Mitteln wird es bei Bedarf fixiert, um ein ungewolltes Verschieben zu vermeiden. Die (relativ) Bewegung bei der Verarbeitung zwischen der Platte 11 und dem Schallkopf 24 ist durch ein Pfeil 38 dargestellt. Der Schallkopf 24 wird hier am Anfang der Nut 35 in diese eingeführt. Mittels einem weiteren Schallkopf erfolgt die Versiegelung an anderen Flächen (nicht näher dargestellt). Der Schallkopf 24 weist eine Form auf, die der zu versiegelnden Oberfläche angepasst ist. Er ist mit Vorteil so ausgestaltet, dass mehrere Oberflächen gleichzeitig verarbeitbar sind. Durch entsprechende Ausgestaltung ist es auch möglich Hinterschnitte zu verarbeiten. Die Versiegelung der Oberfläche erfolgt kontinuierlich oder abschnittweise. Die anderen Oberflächen werden mit entsprechend geformten Schallköpfen verarbeitet (nicht näher dargestellt). Durch die Ausgestaltung der Schallköpfe wird der auf die Oberfläche ausgeübte Druck bestimmt. Ein Schallkopf kann mehrteilig und beweglich ausgebildet sein, so dass er sich der Kontur anpasst. Nach dem Zusammenbauen der Schnapp- oder Steckverbindung können diese durch erneutes Aufschmelzen der Versiegelung dauerhaft und dicht miteinander verbunden werden.

Dem Fachmann ist es möglich nach Kenntnis der hier offenbarten Erfindung diese entsprechend auf andere Körper und deren Oberflächen anzuwenden.

## Patentansprüche

1. Verwendung eines Verfahrens, in dem ein dünnes Material (21) auf einer Oberfläche (13) positioniert und dieses dünne Material (21) mit Hilfe eines Schallkopfes (24), durch den das dünne Material partiell und örtlich begrenzt mittels mechanischer Anregung aufgeschmolzen und gleichzeitig an die Oberfläche (13) angepresst wird, mit der Oberfläche (13) verbunden wird, zum grossflächigen. Versiegeln von Böden, Bodenelementen, Wänden, Wandelementen oder Trägerplatten aus porösen, faserigen Materialien.

2. Verwendung nach Anspruch 1, **dadurch gekennzeichnet, dass** die porösen, faserigen Materialien Holz, Spanplatten, Kork, Karton oder Faserplatten sind.

3. Verwendung nach einem der Ansprüche 1 oder 2, **dadurch gekennzeichnet, dass** das dünne Material (21) aus einer Folie oder aus einer Mehrzahl von Folien besteht.

4. Verwendung nach einem der Ansprüche 1 bis 3, **dadurch gekennzeichnet, dass** das dünne Material (21) dekorative Elemente aufweist.

## Claims

1. Use of a method in which a thin material (21) is positioned on a surface (13) and is connected to this surface by being melted partially and in a locally limited manner by means of mechanical stimulation with the aid of a sonic head (24) and by being simultaneously pressed onto the surface (13), for the large-area-sealing of floors, floor elements, walls, wall elements or carrier boards made of porous, fibrous materials.

2. Use according to claim 1, **characterized in that** the porous, fibrous materials are wood, chipboard, cork, cardboard or fiberboard.

3. Use according to one of the claims 1 or 2, **characterized in that** the thin material (21) consists of a film or a tape or of a plurality of films or tapes.

4. Use according to one of the claims 1 to 3, **characterized in that** the thin material (21) comprises decorative elements.

## Revendications

1. Utilisation d'un procédé dans lequel un matériau mince (21) est positionné sur une surface (13) et ce matériau mince (21) est lié à la surface (13) à l'aide d'une tête à ultrasons (24) par laquelle le matériau mince est fondu partiellement et de façon localement limitée par excitation mécanique et pressé simultanément contre la surface (13), pour l'obturation des pores sur une grande surface de sols, d'éléments de sol, de murs, d'éléments de mur ou de plaques de support en matériaux poreux et fibreux.

2. Utilisation selon la revendication 1, **caractérisée en ce que** les matériaux poreux et fibreux sont du bois, des panneaux de particules, du liège, du carton ou des panneaux de fibres.

3. Utilisation selon l'une des revendications 1 ou 2, **caractérisée en ce que** le matériau mince (21) se compose d'une feuille ou d'une pluralité de feuilles.

4. Utilisation selon l'une des revendications 1 à 3, **caractérisée en ce que** le matériau mince (21) présente des éléments décoratifs.
